# EUROPEAN PATENT APPLICATION

(11) **EP 2 763 300 A1**
(43) Date of publication of application: **06.08.2014**
(21) Application number: 14152092.4
(22) Date of filing: 22.01.2014
(51) Int. Cl.: H02M 1/12, H02M 7/487

(54) **System and method for power conversion**

(30) Priority: 30.01.2013 CN 201310036511
(71) Applicant: GE Energy Power Conversion Technology Ltd, Rugby Warwickshire CV21 1BU (GB)
(72) Inventor: Zhu, Yi, Shanghai, Shanghai 201203 (CN); Zhang, Fan, Shanghai, Shanghai 201203 (CN); Schroeder, Stefan, Garching b, Munich 85748 (DE); Shen, Jie, Garching b, Munich 85748 (DE); Zhang, Richard, Paris 75007 (FR); Soua, Samir, Massy 81345 (FR)
(74) Representative: Serjeants LLP

(57) **Abstract**

A grid-side transformerless power conversion system is configured to perform power conversion between a power grid (622) and an electric motor. The transformerless power conversion system includes a first converter (624), a first filter (630), and a second converter. The first converter (624) is configured to convert first AC power provided from the power grid (622) into DC power. The first converter (624) includes a first converter module and a second converter module coupled to the first converter module to form a nested neutral point piloted topology. The first filter (630) is coupled between the power grid (622) and the first converter (624). The second converter is coupled to the first converter (624). The second converter is configured to convert the DC power into second AC power and provide the second AC power to the electric motor.

## Description

### BACKGROUND

Embodiments of the disclosure relate generally to systems and methods for power conversion.

At least some known converters have been used as power conversion device for converting power from one form to another. In particular, multi-level converters are increasingly used for performing power conversion in a wide range of applications due to the advantages of high power quality waveform and high voltage capability. For example, multi-level converters or multi-level inverters are being used in industrial areas, including but not limited to, petro-chemistry, papermaking industry, mine, power plant, and water treatment plant, to provide electric power (e.g., AC electric power) for driving one or more loads such as AC electric motor.

At least some of the conventional medium-to-high voltage power conversion systems include a multiple pulse rectifier for converting AC voltage received from a power grid into DC voltage. Further, the power conversion system may include a transformer electrically coupled between the power grid and the rectifier. Particular harmonic signals can be canceled by shifting phase of voltage signals at a secondary side of the transformer. However, at least some drawbacks of such a configuration are high weight, high cost, and high power consumption. In addition, power can only be transferred from the power grid to the load, because the multiple pulse rectifiers typically employ un-controllable rectifying circuit to perform AC-DC power conversion. Therefore, it is desirable to provide systems and methods with new or improved circuit configurations to address one or more of the above-mentioned limitations of current systems and methods.

### BRIEF DESCRIPTION

In accordance with one aspect of the present disclosure, a grid-side transformerless power conversion system is provided. The transformerless power conversion system is configured to perform power conversion between a power grid and a load. The transformerless power conversion system includes a first converter, a first filter, and a second converter. The first converter is configured to convert first AC power provided from the power grid into DC power. The first converter includes a first converter module and a second converter module coupled to the first converter module to form a nested neutral point piloted topology. The first filter is coupled between the power grid and the first converter. The second converter is coupled to the first converter. The second converter is configured to convert the DC power into second AC power and provide the second AC power to the load.

In accordance with another aspect of the present disclosure, a grid-side transformerless power conversion system is provided. The grid-side transformerless power conversion system is configured to perform power conversion between a power grid and an electric motor. The transformerless power conversion system includes a first converter, a differential-mode (DM) filter, a second converter, and a common-mode (CM) filter. The first converter is configured to convert first AC power provided from the power grid into DC power. The first converter includes a first converter module and a second converter module coupled to the first converter module to form a nested neutral point piloted topology. The DM filter is coupled between the power grid and the first converter. The second converter is coupled to the first converter. The second converter is configured to convert the DC power into second AC power and provide the second AC power to the electric motor. The CM filter is coupled between the power grid and the first converter or is coupled between the first converter and the second converter.

In accordance with another aspect of the present disclosure, a method for performing power conversion between a power grid and an electric motor using a power conversion system is provided. The power conversion system includes an AC-DC converter and a DC-AC converter. The AC-DC converter includes at least a first converter module and a second converter module coupled together to form a nested neutral point piloted topology. The method includes: receiving first AC voltage filtered by a grid-side filter, wherein the first AC voltage is not processed by a grid-side transformer; converting the first AC voltage to DC voltage using the AC-DC converter; converting the DC voltage to second AC voltage using the DC-AC converter; and providing the second AC voltage to the electric motor.

### DRAWINGS

These and other features, aspects, and advantages of the present disclosure will become better understood when the following detailed description is read with reference to the accompanying drawings in which like characters represent like parts throughout the drawings, wherein:
FIG. 1 illustrates a block diagram of a system in accordance with an exemplary embodiment of the present disclosure;
FIG. 2 illustrates a detailed diagram of a converter of the system shown in FIG. 1 in accordance with an exemplary embodiment of the present disclosure;
FIG. 3 illustrates a schematic diagram of a single phase leg of the converter shown in FIG. 2 in accordance with an exemplary embodiment of the present disclosure;
FIG. 4 illustrates waveforms of switching signals supplied to the eight switch units in the first phase leg shown in FIG. 3 and corresponding voltage and current waveforms in accordance with an exemplary embodiment of the present disclosure;
FIG. 5 illustrates an output voltage waveform of the converter shown in FIG. 2 in accordance with an exemplary embodiment of the present disclosure;
FIG. 6 illustrates a schematic diagram of a first type switch unit used in the converter shown in FIG. 2 in accordance with an exemplary embodiment of the present disclosure;
FIG. 7 illustrates a schematic diagram of a first type switch unit used in the converter shown in FIG. 2 in accordance with another exemplary embodiment of the present disclosure;
FIG. 8 illustrates a schematic diagram of second type switch unit used in the converter shown in FIG. 2 in accordance with an exemplary embodiment of the present disclosure;
FIG. 9 illustrates a schematic diagram of a second type switch unit used in the converter shown in FIG. 2 in accordance with another exemplary embodiment of the present disclosure;
FIG. 10 illustrates a schematic diagram of one phase leg of a converter in accordance with an exemplary embodiment of the present disclosure;
FIG. 11 illustrates a schematic diagram of at least a part of a grid side or rectifier side of the power conversion system shown in FIG. 1 in accordance with an exemplary embodiment of the present disclosure;
FIG. 12 illustrates a schematic diagram of at least a part of a grid side or rectifier side of the power conversion system shown in FIG. 1 in accordance with another exemplary embodiment of the present disclosure;
FIG. 13 illustrates a schematic diagram of at least a part of a grid side or rectifier side of the power conversion system shown in FIG. 1 in accordance with another exemplary embodiment of the present disclosure;
FIG. 14 illustrates a schematic diagram of at least a part of a grid side or rectifier side of the power conversion system shown in FIG. 1 in accordance with another exemplary embodiment of the present disclosure;
FIG. 15 illustrates a schematic diagram of at least a part of a grid side or rectifier side of the power conversion system shown in FIG. 1 in accordance with another exemplary embodiment of the present disclosure;
FIG. 16 illustrates a schematic diagram of at least a part of a grid side or rectifier side of the power conversion system shown in FIG. 1 in accordance with another exemplary embodiment of the present disclosure;
FIG. 17 illustrates a schematic diagram of at least a part of a load side or machine side of the power conversion system shown in FIG. 1 in accordance with an exemplary embodiment of the present disclosure; and
FIG. 18 illustrates a flowchart of a method for power conversion in accordance with an exemplary embodiment of the present disclosure.

### DETAILED DESCRIPTION

In an effort to provide a concise description of these embodiments, not all features of an actual implementation are described in the one or more specific embodiments. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Unless defined otherwise, technical and scientific terms used herein have the same meaning as is commonly understood by one of ordinary skill in the art to which this disclosure belongs. The terms "first," "second," and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean either any, several, or all of the listed items. The use of "including," "comprising," or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. The terms "circuit," "circuitry," and "controller" may include either a single component or a plurality of components, which are either active and/or passive components and may be optionally connected or otherwise coupled together to provide the described function.

Embodiments disclosed herein generally relate to converters which may be configured to perform power conversion for converting one form of electric power (e.g., DC or AC electric power) to another form of electric power (DC or AC electric power) in a unidirectional or bidirectional manner. In particular, in some embodiments, the inventors of the present disclosure have worked together to propose a new converter topology or an improved nested neutral point piloted (NPP) topology for use in converters. The technical advantages or benefits of utilizing such a new or improved nested NPP topology is that the converter can be operated to provide better output waveforms, thereby output voltage ripples can be significantly suppressed, the volume or weight of the filter can be reduced, as well as the power capability of the converter can be improved. As used herein, "nested NPP" refers to an arrangement that at least two converter modules having the same or different structures can be coupled or cascaded together in an inside-to-outside or outside-to-inside manner (also can be viewed as left-to-right or right-to-left) in connection with the use of flying capacitors, to achieve higher output levels. In one example, a five-level converter can be constructed by nesting one three-level converter module with another three-level converter module. In another example, a seven-level converter can be constructed by nesting a three-level converter module with a five-level converter module. Also, the seven-level converter can be constructed by nesting three three-level converter modules one by one. It is apparent to those skilled in the art that converters capable of providing higher output levels can be constructed by nesting more converter modules together.

In some embodiments, on basis of the proposed new or improved nested NPP topology, the converter module used for nesting can be arranged to have a plurality of switch units. For example, a three-level converter module can be constructed to have at least one switch unit in a first longitudinal arm, at least one switch unit in a second longitudinal arm, and at least two switch units in a transverse arm. In some embodiments, at least two of the plurality of switch units can be switched on and/or off both in a complementary pattern and a non-complementary pattern. As used herein, "complementary pattern" refers one switch unit is on and another switch unit is off and vice versa. As used herein, "non-complementary pattern" refers to two switch units are operated to have the same switching states, such as both on and both off.

In some embodiments, on basis of the proposed new or improved nested NPP topology, in one or more switching control cycles, redundant switching states of the switching signals supplied to the plurality of switch units can be selectively used to balance the voltages of flying capacitors arranged in the converter.

In some embodiments, on basis of the proposed new or improved nested NPP topology, during at least a part of one switching control cycle, at least one switching signal supplied to the plurality of switch units can be blocked or masked to reduce switching numbers of the switch units, so as to reduce power loss without changing the switching states of the plurality of switch units and output voltage and/or current of the converter.

In some embodiments, on basis of the proposed new or improved nested NPP topology, at least some of the switch units arranged in the converter module can be configured to have a structure formed by multiple series-connected switch devices. In some embodiments, the multiple series-connected switch devices can utilize low voltage rating switch devices, and the specific number of the switch devices can be determined based at least in part on associated operating parameters of the converter, such as DC-link voltages and nominal voltages of the switch devices.

In some embodiments, to ensure synchronous switching of the multiple series-connected switch devices, multiple driving circuits are provided to supply switching signals for the multiple switch devices. Further, in some embodiments, each switch device is arranged with a snubber circuit to ensure that the multiple switch devices can share substantially the same voltage during the process that the switch devices are switched on and/or off.

Still in some embodiments, the new or improved nested neutral point piloted topology can be specifically implemented by a rectifier located adjacent to a grid. The rectifier can be controlled to perform bi-directional power conversion, that is, AC-DC conversion and DC-AC conversion. In this circumstance, a conventionally used transformer can be eliminated.

It is apparent to those skilled in the art that the new or improved nested NPP topology as proposed herein can be specifically implemented as an AC-DC converter (also can be referred to as rectifier) for converting single-phase, three-phase, or multiple-phase alternating-current voltage into DC voltage. Furthermore, the new or improved nested NPP topology as proposed herein can be specifically implemented as a DC-AC converter (also can be referred to as inverter) for converting DC voltage into single-phase, three-phase, or multiple-phase alternating-current voltage, such that one or more particular load such as three-phase AC electric motor can be driven to work.

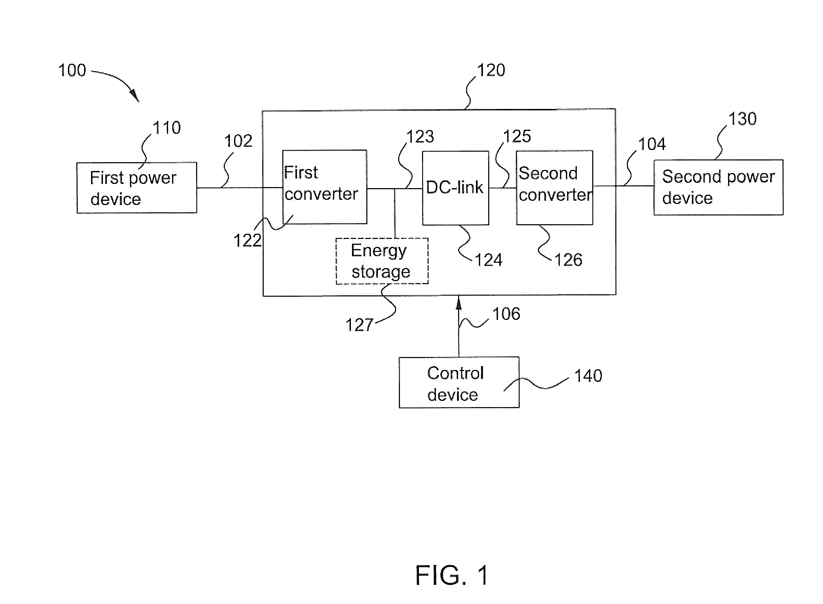

FIG. 1 illustrates a block diagram of a system 100 in accordance with an exemplary embodiment of the present disclosure. The system 100 may be any appropriate converter-based system that is capable of being configured to implement the new or improved nested NPP topology as disclosed herein. In some embodiments, the system 100 may be a multi-level converter-based system suitable for high power and high voltage applications. For example, the system 100 can be utilized in the following areas, including but not limited to, petro-chemistry, papermaking industry, mine, power plant, and water treatment plant, for driving one or more particular loads, such as pump, fan, and conveying device.

As illustrated in FIG. 1, the system 100 generally includes a power conversion device 120 and a control device 140 coupled in communication with the power conversion device 120. In one embodiment, the control device 140 is arranged to be in electrical communication with the power conversion device 120 and may transmit control signals 106 to the power conversion device 120 via one or more electrical links or wires for example. In another embodiment, the control device 140 may be in optical communication with the power conversion device 120 and can transmit the control signals 106 to the power conversion device 120 via an optical communication link, such as one or more optical fibers for example. The control device 140 may include any suitable programmable circuits or devices such as a digital signal processor (DSP), a field programmable gate array (FPGA), a programmable logic controller (PLC), and an application specific integrated circuit (ASIC). The power conversion device 120 can be operated to perform unidirectional or bidirectional power conversion between a first power device 110 and a second power device 130 in response to the control signals 106 transmitted from the control device 140.

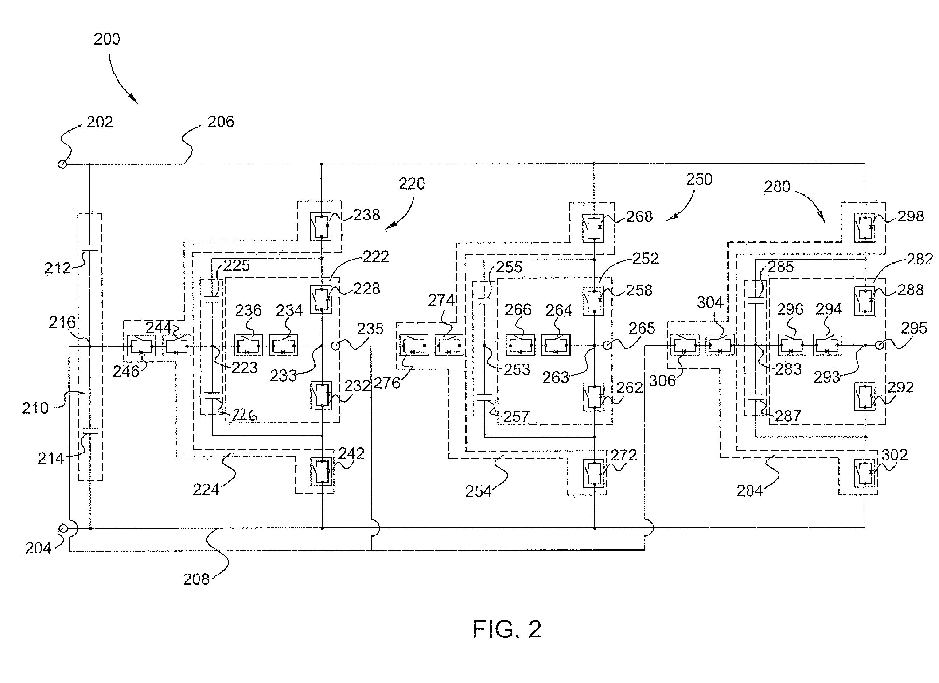

In one embodiment, as shown in FIG. 1, the power conversion device 120 may include a first converter 122, a DC link 124, and a second converter 126. In one embodiment, the first converter 122 may be an AC-DC converter which is configured to convert first electric power 102 (e.g., first AC electric power) provided from the first power device 110 (e.g., power grid) into DC electric power 123 (e.g., DC voltage). In some specific embodiments, the first converter 122 may employ the nested NPP topology which will be described in detail below with reference to FIG. 2. In one embodiment, the DC-link 124 may include multiple capacitors configured to filter first DC voltage 123 provided from the first converter 122, and supply second DC voltage 125 to the second converter 126. In one embodiment, the second converter 126 may be a DC-AC converter which is configured to convert the second DC voltage 125 into a second AC voltage 104, and supply the second AC voltage 104 to the second power device 130 (e.g., AC electric motor). In one embodiment, the second converter 126 may be constructed with controlled switch devices arranged to have the nested NPP topology which will be described in detail below with reference to FIG. 2. Although not illustrated in FIG. 1, in some embodiments, the system 100 may include one or more other devices and components. For example, one or more filters and/or circuit breakers can be placed between the first power device 110 and the power conversion device 120. Also, one or more filters and/or circuit breakers can be placed between the power conversion device 120 and the second power device 130.

In other embodiments, the system 100 constructed with the new or improved nested NPP topology disclosed herein can also be used in power generation systems, including but not limited to, wind power generation systems, solar/photovoltaic power generation systems, hydropower generation systems, and combinations thereof. In one embodiment, the first power device 110 may include one or more wind turbines which are configured to provide variable-frequency electric power. The first converter 122 may be an AC-DC converter and the second converter 126 may be a DC-AC converter, such that the variable-frequency electric power 102 can be converted into a fixed-frequency electrical power 104, for example, 50 Hertz or 60 Hertz AC power. The fixed-frequency electrical power 104 may be supplied to the second power device 130 such as a power grid for transmission and/or distribution. In some embodiments, the second power device 130 may include a load such as an electric motor used in a vehicle, a fan, or a pump, which can be driven by the second electric power 104. In some embodiments, when the system 100 is implemented as a solar power generation system, the first converter 122 may be a DC-DC converter for performing DC electric power conversion. In some occasions, the first converter 122 can be omitted, such that the second converter or DC-AC converter 126 is responsible for converting DC electric power provided from the first power device 110 (e.g., one or more solar panels) into AC electric power.

In some other embodiments, the system 100 may also be used in areas that are desirable to use uninterruptible/uninterrupted power system (UPS) for maintaining continuous power supply. In such applications, the power conversion device 120 of the system 100 may also be configured to have the new or improved nested NPP topology. In one embodiment, the first converter 122 may be an AC-DC converter which is configured to convert first AC electric power provided from the first power device 110 (e.g., power grid) into DC electric power. The system 100 may also include an energy storage device 127 which is configured to receive and store the DC electric power provided from the first converter 122. In one embodiment, the second converter 126 may be a DC-AC converter which is configured to convert the DC electric power provided from the first converter 122 or DC electric power obtained from the energy storage device 127 into second AC electric power, and supply the second electric power to the second power device 130 (e.g., a load).

Turning now to FIG. 2, which illustrates a detailed topology diagram of a converter 200 in accordance with an exemplary embodiment of the present disclosure. In one embodiment, the converter 200 can be used as the second converter 126, or more particularly, a DC-AC converter. In one embodiment, the converter 200 includes a first port 202 and a second port 204, both of which are configured to receive DC voltage such as the DC voltage 123 (see FIG. 1) provided from the first converter 122. The first port 202 is electrically coupled a first DC line 206, and the second port 204 is electrically coupled to a second DC line 208. A DC-link 210 is also electrically coupled between the first port 202 and the second port 204 for performing filtering operations with respect to the received DC voltage and maintaining substantially constant voltage for subsequent switch devices coupled thereto. In one embodiment, the DC-link 210 includes a first capacitor 212 and a second capacitor 214 coupled in series between the first DC line 206 and the second DC line 208. A DC middle point 216 is defined between the first capacitor 212 and the second capacitor 214. In other embodiments, the DC-link 210 may include more than two capacitors, and at least part of the capacitors can be coupled in series or in parallel.

With continuing reference to FIG. 2, the converter 200 comprises a first phase leg 220, a second phase leg 250, and a third phase leg 280. Each of the three phase legs 220, 250, 280 is electrically coupled between the first DC line 206 and the second DC line 208 for receiving DC voltage provided from the DC link 210 and providing output voltage at its corresponding output port. More specifically, in one embodiment, the first phase leg 220 provides a first phase AC voltage through first output port 235, the second phase leg 250 provides a second phase AC voltage through second output port 265, and the third phase leg 280 provides a third phase AC voltage through third output port 295. The first phase AC voltage, the second phase AC voltage, and the third phase AC voltage are offset from one another by 120 degrees. It should be understood that, when the converter 200 is implemented as an AC-DC converter, the three output ports 235, 265, 295 can be configured to receive input AC voltages. Thus, the three output ports 235, 265, 295 can be generally referred to as AC ports. Similarly, the first port 202 and the second port 204 can also be configured to output DC voltage, in which case the two ports 202, 204 can be generally referred to as DC ports.

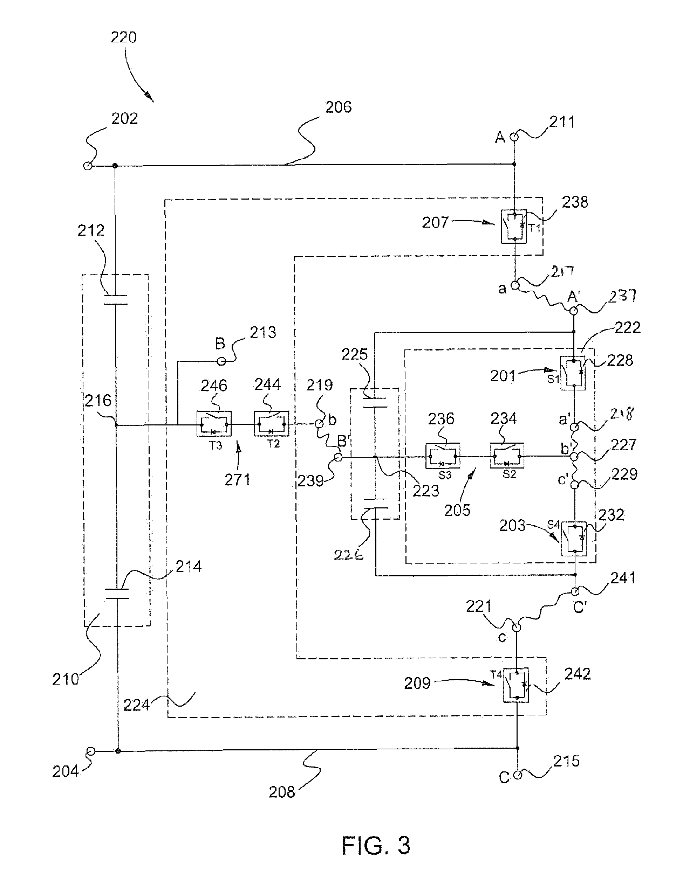

Please referring to FIG. 2 and FIG. 3 together, in one embodiment, the first phase leg 220 includes at least two converter modules that are constructed to have the same structure. The two converter modules are coupled together in a nested manner to achieve a higher level phase leg. More specifically, the first phase leg 220 includes a first converter module 222 and a second converter module 224 coupled together in a nested manner. In one embodiment, the first converter module 222 can be configured to provide an output voltage having 2n₁+1 levels, and the second converter module 224 can be configured to provide an output voltage having 2n₂+1 levels, where n₁ and n₂ are both equal to or larger than one, and n₁ is equal to n₂. In another embodiment, n₁ can be arranged to be different than n₂. In the illustrated embodiment, the first converter module 222 and the second converter module 224 are arranged to provide five-level output voltages. In particular, each of the first and second converter modules 222, 224 is configured to have six connecting terminals for the purpose of connecting with corresponding connecting terminals of other converter modules.

More specifically, in one embodiment, the first converter module 222 includes a first longitudinal arm 201, a second longitudinal arm 203, and a transverse arm 205. It should be noted that "longitudinal" and "transverse" used herein are used for reference only, and not intended to limit the scope of the invention to specific orientations. The first longitudinal arm 201 includes a first switch unit 228 which has one end formed as first-longitudinal-arm first connecting terminal 237 (or A') and another end formed as first-longitudinal-arm second connecting terminal 218 (or a'). The second longitudinal arm 203 includes a second switch unit 232 arranged in the same direction as the first switch unit 228. The second switch unit 232 has one end formed as second-longitudinal-arm first connecting terminal 241 (or C') and another end formed as second-longitudinal-arm second connecting terminal 229 (or c'). The transverse arm 205 includes a third switch unit 234 and a fourth switch unit 236 that are reversely coupled in series. The third switch unit 234 has one end formed as transverse-arm first connecting terminal 227 (or b'), and the fourth switch unit 236 has one end formed as transverse-arm second connecting terminal 239 (or B'). In one embodiment, the transverse-arm second connecting terminal 239 (B') is electrically connected to a flying-capacitor middle point 223 defined between a first flying capacitor 225 and a second flying capacitor 226. In addition, two ends of the first flying capacitor 225 are electrically connected to the two connecting terminals 237, 239 (A', B') respectively, and two ends of the second flying capacitor 226 are electrically connected to the two connecting terminals 241, 239 (C', B') respectively.

Similarly, the second converter module 224 includes a first longitudinal arm 207, a second longitudinal arm 209, and a transverse arm 271. The first longitudinal arm 207 includes a fifth switch unit 238 which has one end formed as first-longitudinal-arm first connecting terminal 217 (or a) and another end formed as first-longitudinal-arm second connecting terminal 211 (or A). The second longitudinal arm 209 includes a sixth switch unit 242 arranged in the same direction as the fifth switch unit 238. The sixth switch unit 242 has one end formed as second-longitudinal-arm first connecting terminal 221 (or c) and another end formed as second-longitudinal-arm second connecting terminal 215 (or C). The transverse arm 271 includes a seventh switch unit 244 and an eighth switch unit 246 that are reversely coupled in series. The seventh switch unit 244 has one end formed as transverse-arm first connecting terminal 219 (or b), and the eighth switch unit 246 has one end formed as transverse-arm second connecting terminal 213 (or B). In one embodiment, the transverse-arm second connecting terminal 213 (B) is electrically connected to a DC-link middle point 216 defined between the first capacitor 212 and the second capacitor 214 of the DC-link 210. In addition, two ends of the first capacitor 212 are electrically connected to the two connecting terminals 211, 213 (A, B) respectively, and two ends of the second capacitor 214 are electrically connected to the two connecting terminals 213, 215 (B, C) respectively.

In the illustrated embodiment, it can be seen that a nested NPP structure is formed by electrically connecting the two connecting terminals 217, 237 (a, A'), electrically connecting the two connecting terminals 219, 239 (b, B'), and electrically connecting the two connecting terminals 221, 241 (c, C'). It can be understood that, in other embodiments, similar connection can be made to form higher level converter by connecting three or more than three six-terminal converter modules. In the illustrated embodiment, since the first converter 222 is arranged as an inner-most block, the three connecting terminals 218, 227, 229 (a', b', c') of the first converter 222 are commonly connected with the AC port 235 for receiving or providing AC voltage. In addition, since the second converter 224 is arranged as an outer-most block, the first-longitudinal-arm second connecting terminal 211 (A) is electrically connected to the first DC port 202 through the first DC line 206, and the second-longitudinal-arm second connecting terminal 215 (C) is electrically connected to the second DC port 204 through the second DC line 208, so as to receive or provide DC voltage.

With continuing reference to FIG. 2, the second phase leg 250 is configured with similar structure as the first phase leg 220. For example, the second phase leg 250 also includes a first converter module 252 and a second converter module 254 that are coupled together in a nested manner. Each of the first and second converter modules 252, 254 has six connection terminals for connecting to corresponding terminals of other converter module. The first converter module 252 includes four switch units 258, 262, 264, 266, and the second converter module 254 includes four switch units 268, 272, 274, 276. The four switch units 258, 262, 264, 266 are connected in series to form a longitudinal arm, and another four switch units 268, 272, 274, 276 are connected in series to form a transverse arm. Two ends of the longitudinal arm are electrically connected to the first DC line 206 and the second DC line 208 respectively. One end of the transverse arm is electrically connected to the DC middle point 216, and the other end of the transverse arm is electrically connected to a joint connection 263 defined between the two switch units 258, 262. In addition, the second phase leg 250 includes two flying capacitors 255, 257 connected in series to form a flying capacitor arm. The two flying capacitors 255, 257 define a flying-capacitor middle point 253 which is electrically connected to a joint connection defined between the two switch units 266, 274. Another end of the first flying capacitor 255 is connected to a joint connection defined between the two switch units 268, 258, and another end of the second flying capacitor 257 is electrically connected to a joint connection defined between the two switch units 262, 272.

With continuing reference to FIG. 2, the third phase leg 280 is configured with similar structure as the first phase leg 220. For example, the third phase leg 280 also includes a first converter module 282 and a second converter module 284 that are coupled together in a nested manner. Each of the first and second converter modules 282, 284 has six connection terminals for connecting to corresponding terminals of other converter module. The first converter module 282 includes four switch units 288, 292, 294, 296, and the second converter module 284 includes four switch units 298, 302, 304, 306. The four switch units 288, 298, 292, 302 are connected in series to form a longitudinal arm, and another four switch units 294, 296, 304, 306 are connected in series to form a transverse arm. Two ends of the longitudinal arm are electrically connected to the first DC line 206 and the second DC line 208 respectively. One end of the transverse arm is electrically connected to the DC middle point 216, and the other end of the transverse arm is electrically connected to a joint connection 293 defined between the two switch units 288, 292. In addition, the third phase leg 280 includes two flying capacitors 285, 287 connected in series to form a flying capacitor arm. The two flying capacitors 285, 287 define a flying-capacitor middle point 283 which is electrically connected to a joint connection defined between the two switch units 296, 304. Another end of the first flying capacitor 285 is connected to a joint connection defined between the two switch units 298, 288, and another end of the second flying capacitor 287 is electrically connected to a joint connection defined between the two switch units 292, 302.

In one embodiment, each of the first phase leg 220, the second phase leg 250, and the third phase leg 280 is configured to provide output voltage of five levels. In particular, the switching states of the switch units in the first leg 220 are shown below in table 1.

**Table-1 Switching states of the first phase leg**

| Output voltage level | Switching states | | | | | | | |
|---|---|---|---|---|---|---|---|---|
| | First switch unit 228 | Second switch unit 232 | Third switch unit 234 | Fourth switch unit 236 | Fifth switch unit 238 | Sixth switch unit 242 | Seventh switch unit 244 | Eighth switch unit 246 |
| 2 | 1 | 0 | 0 | 1 | 1 | 0 | 0 | 1 |
| 1 | 1 | 0 | 0 | 1 | 0 | 0 | 1 | 1 |
| | 0 | 0 | 1 | 1 | 1 | 0 | 0 | 1 |
| 0 | 0 | 0 | 1 | 1 | 0 | 0 | 1 | 1 |
| | 1 | 0 | 0 | 1 | 0 | 1 | 1 | 0 |
| | 0 | 1 | 1 | 0 | 1 | 0 | 0 | 1 |
| -1 | 0 | 0 | 1 | 1 | 0 | 1 | 1 | 0 |
| | 0 | 1 | 1 | 0 | 0 | 0 | 1 | 1 |
| -2 | 0 | 1 | 1 | 0 | 0 | 1 | 1 | 0 |

It can be seen from Table-1, the first phase leg 220 can be controlled to provide output voltage having five different levels of "2," "1," "0," "-1," "1" by selectively controlling the switching states of the eight switch units in the first phase leg 220. It also can be seen when the output voltage level is "2" or "-2," there exists a sole combination switching states for the eight switch units. In contrast, when the output voltage level is "1" and "-1," there exist two combination switching states for the eight switch units. When the output voltage level is "0," there exist three combination switching states for the eight switch units. In some embodiments, the voltage of the first and second flying capacitors 225, 226 can be balanced by selectively using the switching states of the switch units. Furthermore, as shown in Table-1, the switch units of the first phase leg 220 are switched on and/or off in a complementary pattern. For example, the switching states of first switch unit 228 and the second switch unit 234 are switched in opposite states. Likewise, each of the switch unit pairs 232, 234; 238, 244; and 242, 246 are switched in opposite states.

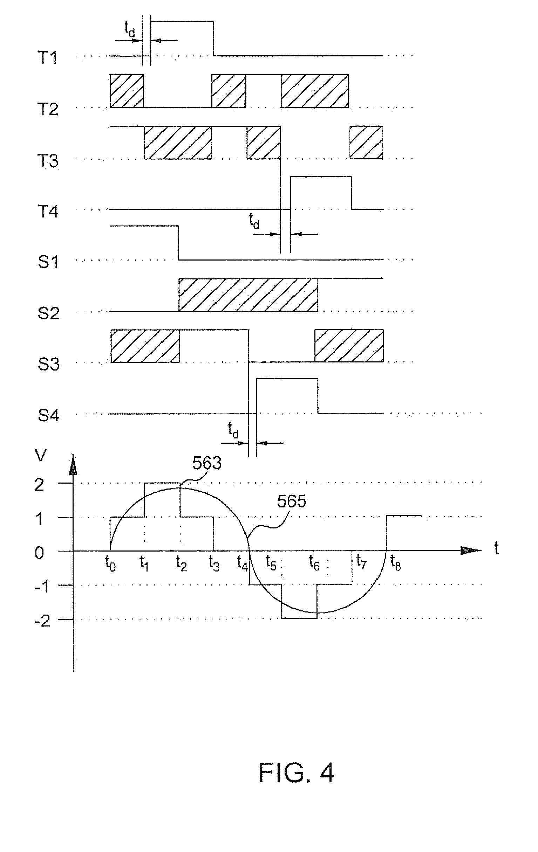

FIG. 4 illustrates waveforms of switching signals supplied to the eight switch units in the first phase leg 220 and corresponding voltage and current waveforms in accordance with an exemplary embodiment of the present disclosure. As shown in FIG. 4, the switch units of the first phase leg 220 can be further configured to be switched on and/or off in a non-complementary pattern. For example, when the output voltage level is transitioning from "1" to "2," the switching signal for the seventh switch unit 244 (T2) becomes logic "0," while the switching signal for the fifth switch unit 238 (T1) becomes logic "1" after a short time delay t_{d} (also known as dead-zone time). It is known that it usually takes longer time to turn off a switch device than turn on a switch device. Thus, the purpose of introducing such a short time delay is to avoid a short-circuit condition of the two flying capacitors when both switch units are in the ON state. In other words, during such a time delay t_{d}, both the seventh switch unit 244 (T2) and the fifth switch unit 238 (T1) are turned off, that is, the two switch units 244, 238 are controlled to operate in a non-complementary pattern. After the time delay t_{d}, the seventh switch unit 244 (T2) remains off and the fifth switch unit 238 (T1) is turned on, in this case, the two switch units 244, 238 are controlled to operate in a complementary pattern.

With continuing reference to FIG. 4, in case the output voltage 563 has a level of "1," the switching signal supplied to the fifth switch unit 238 (T1) is low level signal. Conventionally, to ensure complementary switching, the switching signal supplied to the seventh switch unit 244 (T2) should be a high level signal. In the illustrated embodiment, because electrical current can be flowing through the anti-parallel diode in association with the seventh switch unit 244 (T2), thus, the switching signal supplied to the seventh switch unit 244 (T2) can be temporarily blocked or masked to reduce switching numbers as well as reduce power loss due to the unnecessary switching actions. In this case, the fifth switch unit 238 and the seventh switch unit 244 are also operated in a non-complementary pattern. Similarly, as shown in FIG. 4, the fourth switch unit 234 (S3) and the second switch unit 232 (S4) can also be operated in complementary pattern and non-complementary pattern due to the introduction of delay time t_{d}. Furthermore, as shown in FIG. 4, in one embodiment, during the single switching control cycle starting from to to t₈, the switching signals supplied to the switch units T2, T3, S2, S3 in the transverse arm are blocked in predetermined time period, so as to reduce switching numbers as well as power loss. In other embodiment, switching signals supplied to switch units T1, T4, S1, S4 in the longitudinal arm can be blocked to reduce switching numbers as well as power loss.

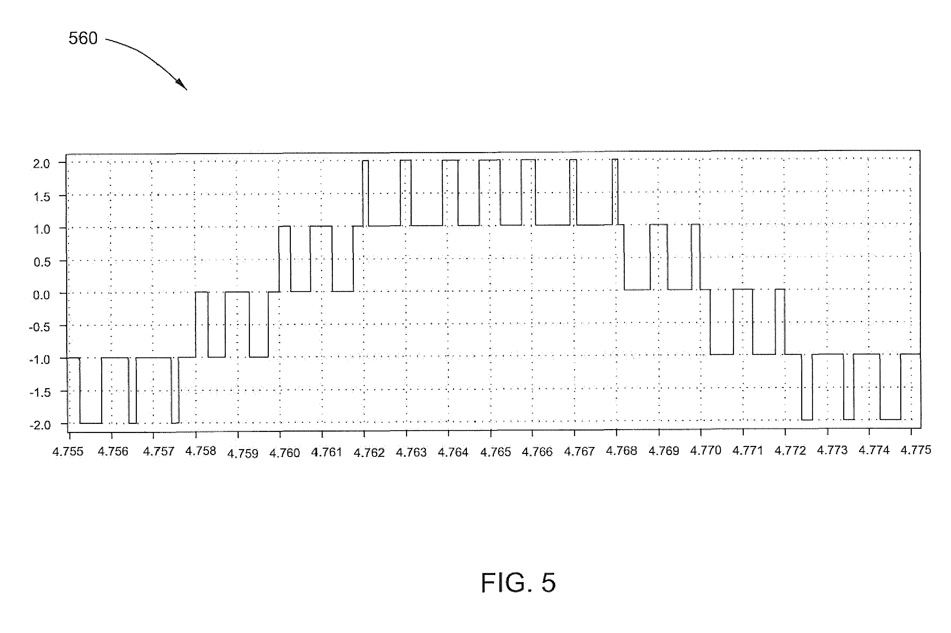

FIG. 5 illustrates an output voltage waveform 560 of the converter shown in FIG. 2 in accordance with an exemplary embodiment of the present disclosure. As shown in FIG. 5, with the use of converter having a nested NPP topology, one phase leg of the converter can provide output voltage having five levels with good waveforms.

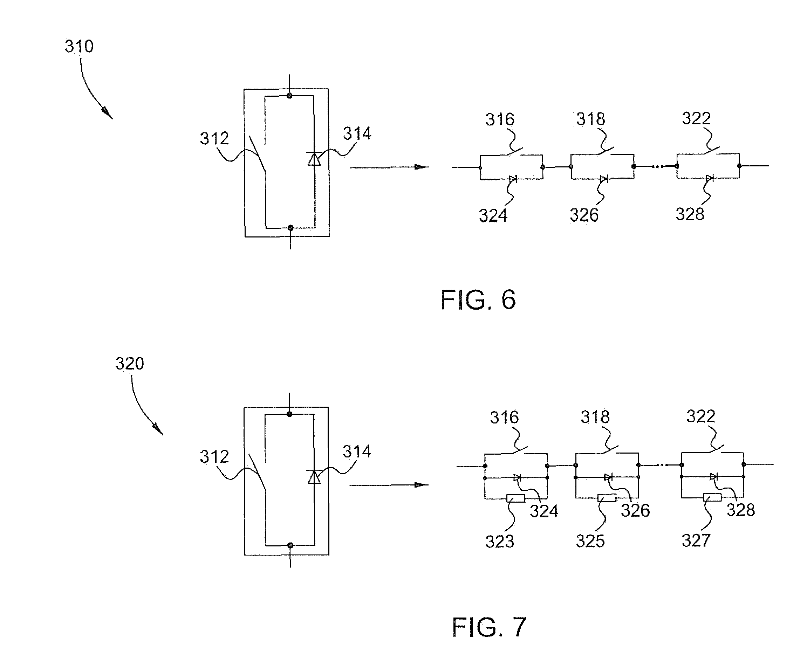

FIG. 6 illustrates a schematic diagram of a first type switch unit 310 contained in the converter as shown in FIG. 2 in accordance with an exemplary embodiment of the present disclosure. In one embodiment, the first type switch unit 310 can be any one of the switch units in the longitudinal arm of the three phase legs. In a particular embodiment, the first four switch units 238, 228, 232, 242 in the longitudinal arm of the first phase leg 220 can be configured to be exactly the same as the switch unit 310. More specifically, in one embodiment, the switch unit 310 may include a single switch device or include multiple series-connected switch devices. For example, in one embodiment, the switch unit 310 includes a first switch device 316, a second switch device 318, and a p^{th} switch device 322, where p is equal to or larger than two. In addition, in one embodiment, the first switch device 316 is connected in parallel with a first anti-parallel diode 324, the second switch device 318 is connected in parallel with a second anti-parallel diode 326, and the p^{th} switch device 322 is connected in parallel with a p^{th} anti-parallel diode 328. In some conditions, each switch device can be integrated with the anti-parallel diode to form a single device. Because the first switch device 316, the second switch device 318, and the p^{th} switch device 322 are connected in series between the DC lines 206, 208, each of the switch devices is applied with a portion of the DC voltage. Thus, low nominal voltage switch device can be used to replace a single switch device 312 (as shown in FIG. 6, the single switch device 312 is also integrated with an anti-parallel diode 314) which has a high nominal voltage. Non-limiting examples of the switch device that may be used in the converter may include metal oxide semiconductor field effect transistor (MOSFET), insulated gate bipolar transistor (IGBT), and integrated gate commutated thyristor (IGCT).

FIG. 7 illustrates a schematic diagram of a first type switch unit 320 in accordance with another exemplary embodiment of the present disclosure. The first type switch unit 320 shown in FIG. 7 is substantially similar to the first type switch unit 310 shown in FIG. 6. For example, the first type switch unit 320 also includes a first switch device 316, a second switch device 318, and a p^{th} switch device 322, where p is equal to or larger than two. The first type switch unit 320 also includes a first anti-parallel diode 324, a second anti-parallel diode 326, and a p^{th} anti-parallel diode 328, each of which is coupled in parallel with a corresponding switch device. In addition, the first type switch unit 320 further includes a first snubber circuit 323 arranged in association with the first switch device 316, a second snubber circuit 325 arranged in association with the second switch device 318, and a third snubber circuit 327 arranged in association with the third switch device 322. In a particular embodiment, the first, second, and third snubber circuits 323, 325, 327 can be formed by one or more passive electronic devices such as capacitors, resistors, and so on. The purpose of providing these snubber circuits 323, 325, 327 is to ensure voltage to be shared equally among the switch devices 316, 318, 322 during the dynamic switching processes.

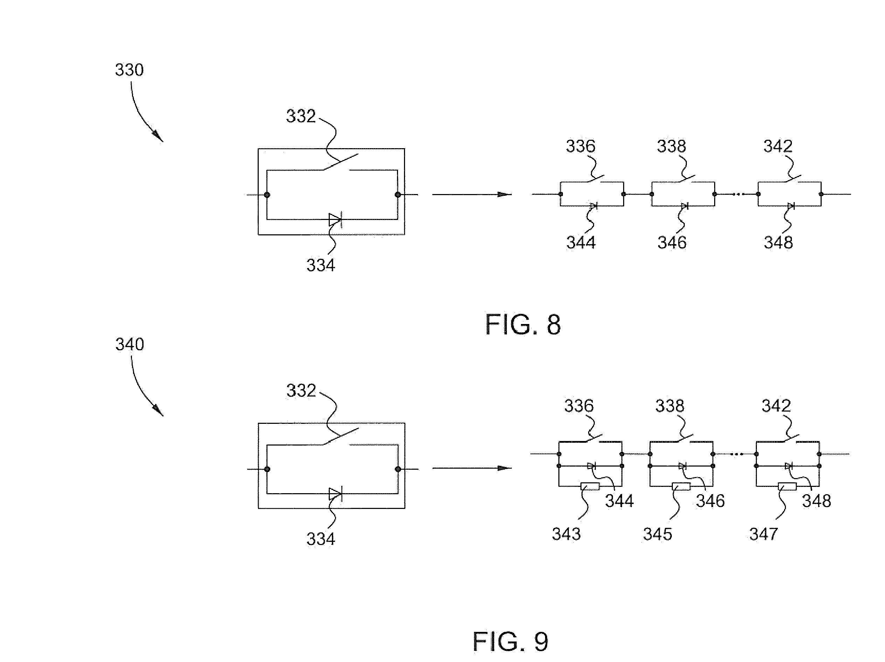

FIG. 8 illustrates a schematic diagram of a second type switch unit 330 used in the converter shown in FIG. 2 in accordance with an exemplary embodiment of the present disclosure. In one embodiment, the second type switch unit 330 can be any one of the switch unit in the transverse arm of the three phase legs. In a particular embodiment, the first four switch units 234, 236, 244, 246 in the transverse arm of the first phase leg 220 can be configured to be exactly the same as the switch unit 320. More specifically, in one embodiment, the switch unit 320 includes a first switch device 336, a second switch device 338, and an m^{th} switch device 342, where m is equal to or larger than two. In addition, in one embodiment, the first switch device 336 is connected in parallel with a first anti-parallel diode 344, the second switch device 338 is connected in parallel with a second anti-parallel diode 346, and the m^{th} switch device 342 is connected in parallel with an m^{th} anti-parallel diode 348. In some conditions, each switch device can be integrated with the anti-parallel diode to form a single device. Because the first switch device 316, the second switch device 318, and the m^{th} switch device 342 are connected in series between the DC lines 206, 208, each of the switch devices is applied with a portion of the DC voltage. Thus, low nominal voltage switch device can be used to replace a single switch device 332 (as shown in FIG. 8, the single switch device 332 is also integrated with an anti-parallel diode 334) which has a high nominal voltage. Non-limiting examples of the switch device that may be used in the converter may include metal oxide semiconductor field effect transistor (MOSFET), insulated gate bipolar transistor (IGBT), and integrated gate commutated thyristor (IGCT).

In some embodiments, the switch devices 336, 338, 342 in the second type switch unit 330 can be arranged to be the same as the switch devices 316, 318, 322. In other embodiments, different switch devices having different voltage ratings can be used. In addition, in some embodiments, the number of the switch devices arranged in the first type switch unit 310 can be the same as or different from the number of switch devices arranged in the second type switch unit 330. In some embodiments, the exact number of the switch devices used in the first or second switch units 310, 330 can be determined based on associated operating parameters of the converter, such as DC-link voltages and nominal voltages of the switch devices.

FIG. 9 illustrates a schematic diagram of a second type switch unit 340 in accordance with another exemplary embodiment of the present disclosure. The second type switch unit 340 shown in FIG. 9 is substantially similar to the second type switch unit 330 shown in FIG. 8. More specifically, in one embodiment, the switch unit 340 may include a single switch device or include multiple series-connected switch devices. For example, in one embodiment, the second type switch unit 340 also includes a first switch device 336, a second switch device 338, and an m^{th} switch device 342, where m is equal to or larger than two. The second type switch unit 340 also includes a first anti-parallel diode 344, a second anti-parallel diode 346, and an m^{th} anti-parallel diode 348, each of which is coupled in parallel with a corresponding switch device. In addition, the second type switch unit 340 further includes a first snubber circuit 343 arranged in association with the first switch device 336, a second snubber circuit 345 arranged in association with the second switch device 338, and a third snubber circuit 347 arranged in association with the third switch device 342. In a particular embodiment, the first, second, and third snubber circuits 343, 345, 347 can be formed by one or more passive electronic devices such as capacitors, resistors, and so on. The purpose of providing these snubber circuits 343, 345, 347 is to ensure voltage to be shared equally among the switch devices 336, 338, 342 during the dynamic switching process.

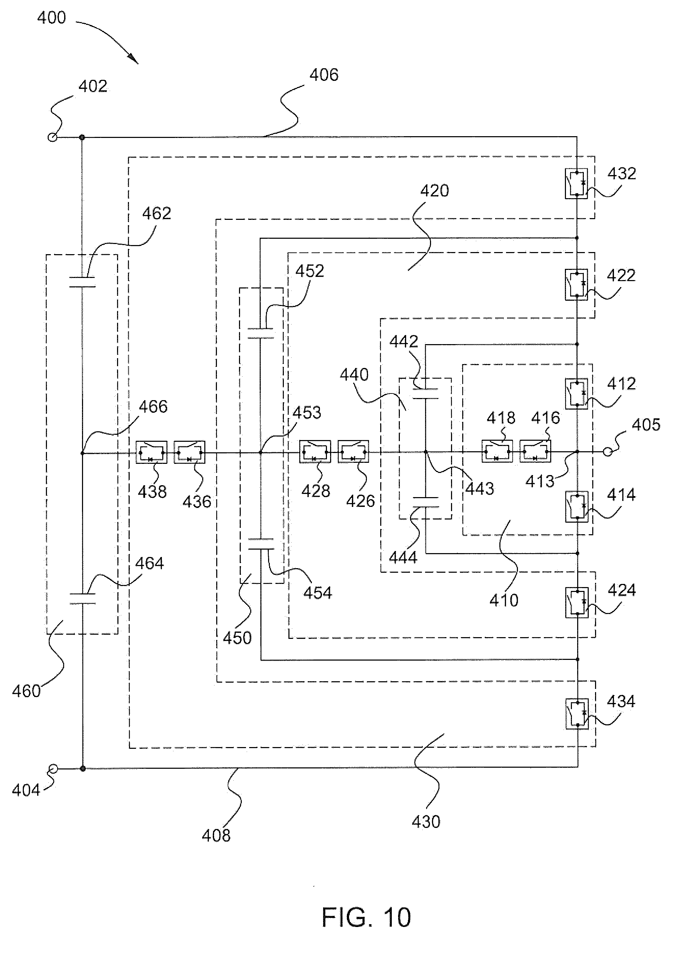

FIG. 10 illustrates a schematic diagram of one phase leg of a converter in accordance with another exemplary embodiment of the present disclosure. In particular, the single phase leg 400 shown in FIG. 10 can be used to replace one or more of the three phase legs 220, 250, 280 shown in FIG. 2. In the illustrated embodiment, the single phase leg 400 is configured to provide an output voltage having seven levels. As shown in FIG. 10, the single phase leg 400 includes a first port 402 and a second port 404 for receiving or providing DC voltages. The single phase leg 400 also includes a DC-link 460 for filtering the DC voltages and providing substantially constant voltage to the switch unit or switch devices connected to the DC-link 460. The single phase leg 400 also includes a third port 405 for providing or receiving AC voltages. In one embodiment, the DC-link 460 is electrically coupled between a first DC line 406 and a second DC line 408, and the first DC-link 406 includes a first capacitor 462 and a second capacitor 464 connected in series.

Referring to FIG. 10, the single phase leg 400 also includes a first converter module 410, a second converter module 420, and a third converter module 430 connected in a nested manner substantially similar to the single phase leg 220 shown in FIG. 3. In the illustrated embodiment, each of the three converter modules 410, 420, 430 is configured to provide three-level output voltage, such that the single phase leg 400 can provide seven-level output voltage. In other embodiments, the single phase leg can also be constructed by nesting a five-level converter module with a three-level converter module. Similar to the single phase leg 220 shown in FIG. 3, each of the three converter modules 410, 420, 430 is arranged to have six connecting terminals for connecting to corresponding connecting terminals of other converter modules. As shown in FIG. 10, the first converter module 410 includes four switch units 412, 414, 416, 418, the second converter module 420 includes four switch units 422, 424, 426, 428, and the third converter module 430 includes four switch units 432, 434, 436, 438. Of these switch units, six switch units 432, 422, 412, 414, 424, 434 are connected in series to form a longitudinal arm, another six switch units 438, 436, 428, 426, 418, 416 are connected in series to form a transverse arm. One end of the transverse arm is electrically connected to DC middle point 466 of the DC link 460, and the other end of the transverse arm is electrically connected to a joint connection 413 defined between the two switch units 412, 414. The single phase leg 400 also includes a first flying capacitor 442 and a second flying capacitor 444 connected in series to form a first flying capacitor arm 440. The single phase leg 400 also includes a third flying capacitor 452 and a fourth flying capacitor 454 connected in series to form a second flying capacitor arm 450. One end of the first flying capacitor 442 and one end of the second flying capacitor 444 are commonly connected to joint connection 443 defined between the two switch units 418, 426. The other end of the first flying capacitor 442 is connected to joint connection defined between the two switch units 422, 412, and the other end of the second flying capacitor 444 is connected to a joint connection defined between the two switch units 414, 424. One end of the third flying capacitor 452 and one end of the fourth flying capacitor 454 are commonly connected to joint connection 453 defined between the two switch units 436, 428. The other end of the third flying capacitor 452 is connected to joint connection defined between the two switch units 432, 422, and the other end of the fourth flying capacitor 454 is connected to a joint connection defined between the two switch units 424, 434.

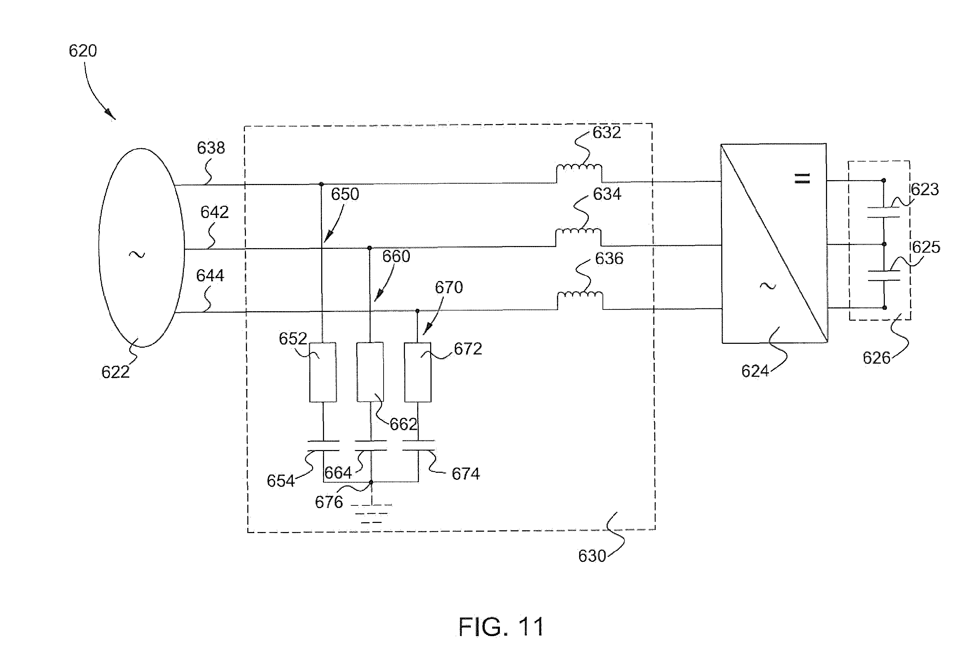

FIG. 11 illustrates a schematic diagram of at least a part of a grid side or rectifier side (generally designated as 620) of the power conversion system shown in FIG. 1 in accordance with an exemplary embodiment of the present disclosure. As illustrated in FIG. 11, the grid side or rectifier side 620 includes a first converter or more specifically an AC-DC converter 624, which is configured to have a nested neutral point piloted topology as shown in FIG. 2 and FIG. 3. The first converter or the AC-DC converter 624 can be configured to operate on four quadrants, that is, bi-directional power conversion can be achieved. In one embodiment, the AC-DC converter 624 is configured to convert electrical power (e.g., single-phase, three-phase, and/or multi-phase electrical power) provided from an input energy device 622 such as a power grid to DC electrical power, and supply the DC electrical power to a DC-link 626. In one embodiment, the DC-link 626 includes a first capacitor 623 and a second capacitor 625 coupled in series. In other embodiments, the AC-DC converter 624 can also be configured to convert DC electrical power provided from the DC-link 626 into AC electrical power, and feed the AC electrical power to the input energy device 622. In a particular embodiment, the input energy device 622 can be a power grid which is configured to provide three-phase AC voltages of 6KV, 6.6KV, 10KV for example. The input energy device or the power grid 622 is electrically coupled to the first converter or the AC-DC converter 624 via a first-phase line 638, a second-phase line 642, and a third-phase line 644. The first-phase line 638 is configured to deliver first-phase AC voltage between the power gird 622 and the first converter 624, the second-phase line 642 is configured to deliver second-phase AC voltage between the power grid 622 and the first converter 624, and the third-phase line 644 is configured to deliver third-phase AC voltage between the power grid 622 and the first converter 624. In one embodiment, the three-phase AC voltages being delivered through the three-phase lines 638, 642, 644 are offset from one another by 120 degrees.

With continuing reference to FIG. 11, in one embodiment, the grid side or rectifier side 620 further includes a first filter 630 (also can be referred to as input filter) which is electrically coupled between the power grid 622 and the first converter 624. As can be understood, in one embodiment, coupling the first converter 624 to the power grid 622 through the first filter 630 can help avoid a conventionally used transformer, thereby the cost and volume of the system can be substantially reduced. In one embodiment, the first filter 630 includes a differential-mode (DM) filter, which, in one aspect, can be configured to remove harmonic signals contained in the three-phase AC voltages provided from the power grid 622. Therefore, negative impact caused from the harmonic signals on the first converter 624 can be mitigated. In another aspect, the first filter 630 can also be configured to remove harmonic signals generated by the first converter 624 so as to meet relevant grid standards.

In the illustrated embodiment of FIG. 11, the first filter or the DM filter 630 includes a first-phase first inductor 632, a second-phase first inductor 634, and a third-phase first inductor 636. The first-phase first inductor 632 is attached to or electrically coupled to the first-phase line 638 arranged between the power grid 622 and the first converter 624. The second-phase first inductor 634 is attached to or electrically coupled to the second-phase line 642 arranged between the power grid 622 and the first converter 624. The third-phase first inductor 636 is attached or electrically coupled to the third-phase line 644 arranged between the power grid 622 and the first converter 624. In one embodiment, the first filter or the DM filter 630 further includes a first branch line 650, a second branch line 660, and a third branch line 670. The first branch line 650 has one terminal connected to the first-phase line 638, the second branch line 660 has one terminal connected to the second-phase line 642, and the third branch line 670 has one terminal connected to the third-phase line 644. The other ends of the first, second, and third branch lines 650, 660, 670 are commonly connected to form a joint connection point 676.

In one embodiment, the first branch line 650 includes a first resistor (also known as damping resistor) 652 and a first capacitor 654 coupled in series, the second branch line 660 includes a second resistor 662 and a second capacitor 664 coupled in series, and the third branch line 670 includes a third resistor 672 and a third capacitor 674 coupled in series. In other embodiments, the first resistor 652 used in first branch line 650, the second resistor 662 used in the second branch line 660, and the third resistor 672 used in the third branch line 670 can be removed. In practical implementation, the inductors can be selected to have appropriate inductance, the capacitors can be selected to have appropriate capacitance, and the resistors can be selected to have appropriate resistance for effective filtering of harmonic signals. In some embodiments, the first filter 630 can be arranged to have its joint connection point 676 being commonly grounded with respect to one or more load-side or machine-side filters. For example, the DM filter 630 can be grounded when the electric motor can withstand common mode stress. In such a case, the common mode voltage is transferred to the machine side, and the machine-side filter can also be grounded to reduce the common-mode stress, thereby one or more common-mode filter can be eliminated. Consequently, in some cases, common mode voltage standard of the grid still can be met without using the common-mode filter, thereby the system efficiency and power density can be improved, and the cost can be reduced.

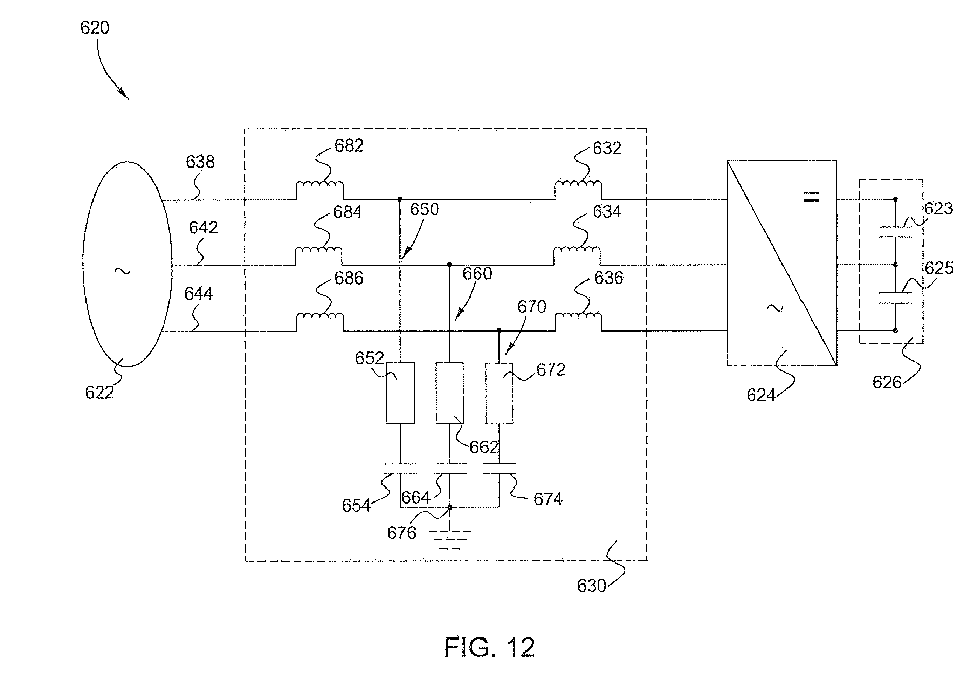

FIG. 12 illustrates a schematic diagram of at least a part of a grid side or rectifier side of the power conversion system shown in FIG. 1 in accordance with another exemplary embodiment of the present disclosure. The arrangements of the grid side 620 shown in FIG. 12 are substantially similar to what has been shown and described with reference to FIG. 11. Thus, elements in FIG. 12 designated with the same reference numerals as that shown in FIG. 11 will not be described in detail. In particular, in the embodiment shown in FIG. 12, the first filter 630 of the grid side or rectifier side 620 may further include a first-phase second inductor 682, a second-phase second inductor 684, and a third-phase second inductor 686. The first-phase second inductor 682 is electrically connected in series with the first-phase first inductor 632, and is attached to or electrically connected to the first-phase line 638. The second-phase second inductor 684 is electrically connected in series with the second-phase first inductor 634, and is attached to or electrically connected to the second-phase line 642. The third-phase second inductor 686 is electrically connected in series with the third-phase first inductor 636, and is attached to or electrically connected to the third-phase line 644. In some specific embodiments, each of the three-phase second inductors 682, 684, 686 is arranged to have a smaller inductance than each of the three-phase first inductors 632, 634, 636, to make sure the capacity or power of the power gird 622 can match that of the first converter 624. In other words, when the capacity or power of the power grid 622 and the first converter 624 are matched, the three-phase second inductors 682, 684, 686 can be omitted.

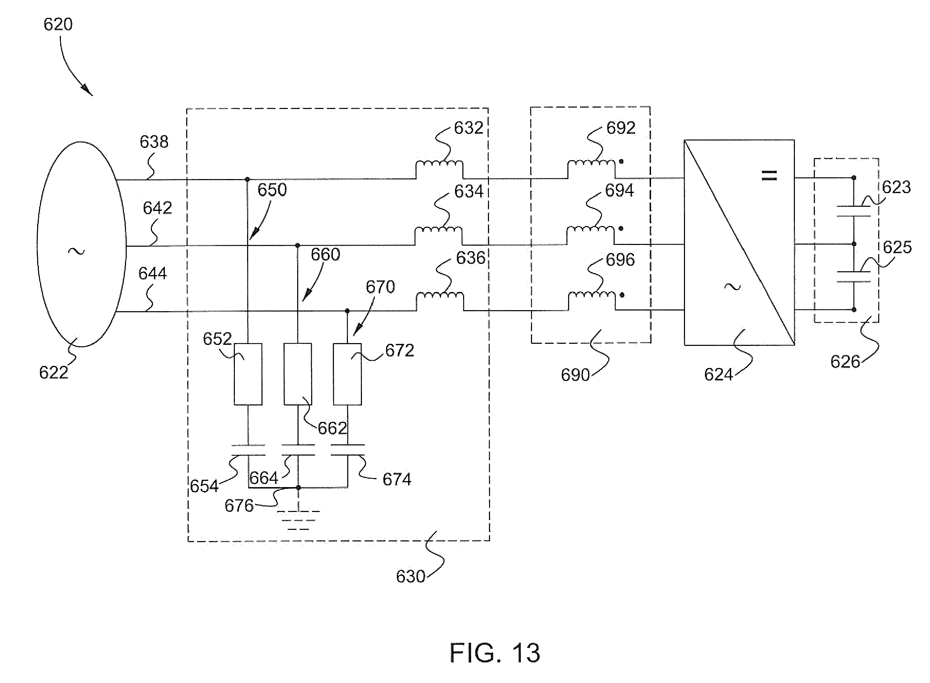

FIG. 13 illustrates a schematic diagram of at least a part of a grid side or rectifier side of the power conversion system shown in FIG. 1 in accordance with another exemplary embodiment of the present disclosure. The arrangements of the grid side 620 shown in FIG. 13 are substantially similar to what has been shown and described with reference to FIG. 11. Thus, elements in FIG. 13 designated with the same reference numerals as that shown in FIG. 11 will not be described in detail. In particular, in the embodiment shown in FIG. 13, the grid side 620 further includes a second filter 690 which is coupled in series with the first filter 630, and is electrically coupled between the power grid 622 and the first converter 624. In one embodiment, the second filter 690 includes a common-mode (CM) filter which includes a first CM inductor 692, a second CM inductor 694, and a third CM inductor 696. The first, second, and third CM inductors 692, 694, 696 are magnetically coupled together with dots shown on the same side. In the illustrated embodiments, the three dots are arranged at a side adjacent to the first converter 624. In other embodiments, the three dots can also be arranged at another side adjacent to the power grid 622. The second filter or the CM filter 690 is configure to remove common-mode signals transmitting along the three-phase lines 638, 642, 644 arranged between the power grid 622 and the first converter 624. As a result, common-mode voltage standards of the power grid can be met, and the conventionally used transformer can be totally removed or eliminated.

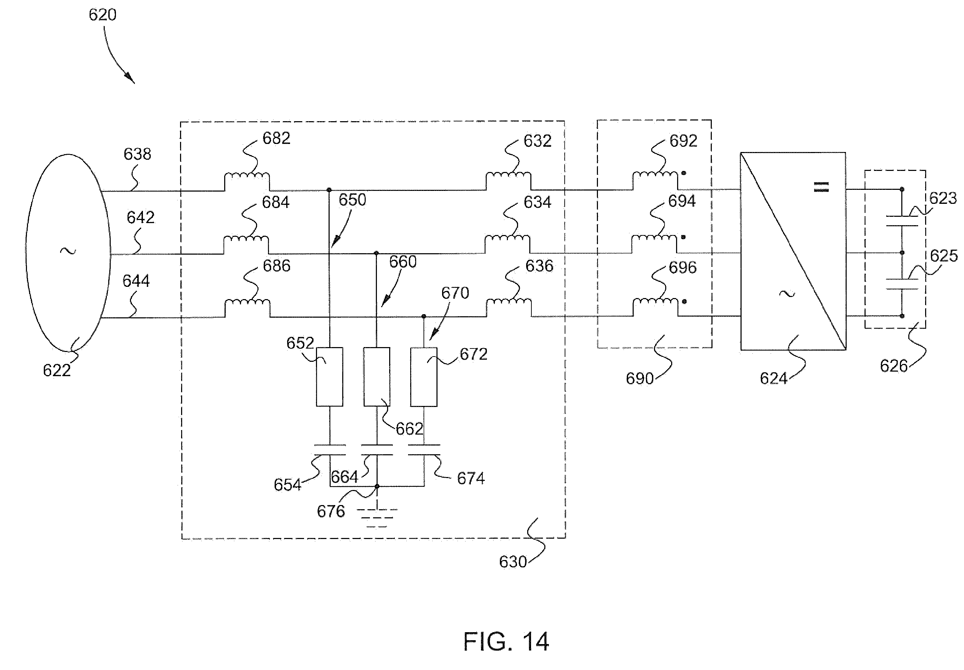

FIG. 14 illustrates a schematic diagram of at least a part of a grid side or rectifier side of the power conversion system shown in FIG. 1 in accordance with another exemplary embodiment of the present disclosure. The arrangements of the grid side 620 shown in FIG. 14 are substantially similar to what has been shown and described with reference to FIG. 11. Thus, elements in FIG. 14 designated with the same reference numerals as FIG. 11 will not be described in detail. In particular, in the embodiment shown in FIG. 14, the grid side 620 further includes three-phase second inductors 682, 684, 686 for matching power or capacity between the power grid 622 and the first converter 624. In addition, in the embodiment shown in FIG. 19, the grid side 620 further includes a second filter 690. In one embodiment, the second filter 690 includes a CM filter which includes three CM inductors 692, 694, 696 for removing common mode signals.

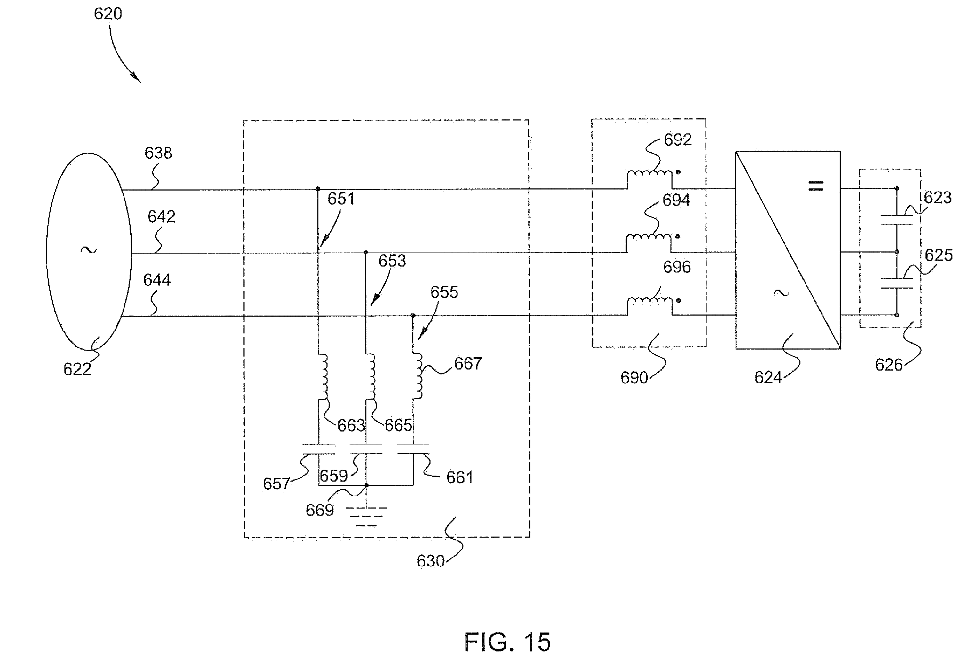

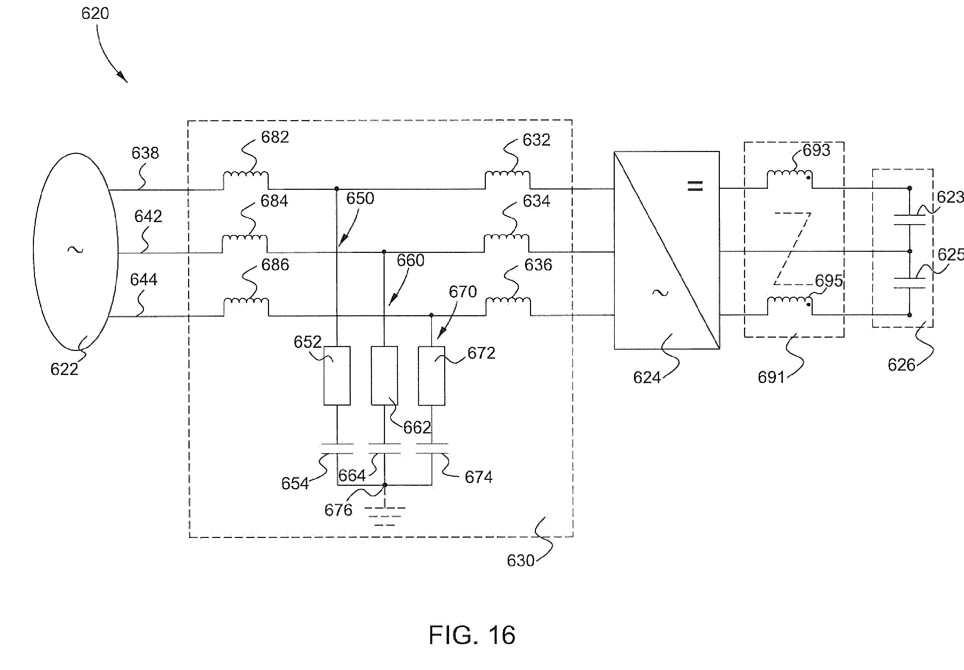

FIG. 15 illustrates a schematic diagram of at least a part of a grid side or rectifier side of the power conversion system shown in FIG. 1 in accordance with another exemplary embodiment of the present disclosure. The arrangements of the grid side 620 shown in FIG. 15 are substantially similar to what has been shown and described with reference to FIG. 11. Thus, elements in FIG. 15 designated with the same reference numerals as FIG. 11 will not be described in detail. In particular, in the embodiment shown in FIG. 16, the first filter or the DM filter 630 at the grid side 620 may be shunt filter used for filtering one or more harmonic signals at the grid side 630. In one embodiment, the shunt filter 630 includes a first phase branch line 651, a second phase branch line 653, and a third phase branch line 655. The first phase branch line 651 is electrically coupled to the first phase line 638, the second phase branch line 653 is electrically coupled to the second phase line 642, and the third phase branch line 655 is electrically coupled to the third phase line 644. In one embodiment, the first phase branch line 651 includes a first shunt inductor 663 and a first shunt capacitor 667 coupled in series, the second phase branch line 653 includes a second shunt inductor 665 and a second shunt capacitor 659 coupled in series, and the third phase branch line 655 includes a third shunt inductor 667 and a third capacitor 661. In the illustrated embodiment, the three phase branch lines 651, 653, 655 are commonly connected to a joint connection 669 which may be selectively grounded. In particular, in some embodiments, it may be desirable to filter multiple harmonic signals, for example, 5^{th} order harmonic signal, 7^{th} order harmonic signal, 11^{th} order harmonic signal, and 13^{th} harmonic signal. In this situation, each of the three phase branch lines 651, 653, 655 may include four sub-branch lines, and the shunt inductor and shunt capacitor in each sub-branch line can be configured to have appropriate inductance and capacitance for effectively removing the corresponding 5^{th} order harmonic signal, 7^{th} order harmonic signal, 11^{th} order harmonic signal, and 13^{th} harmonic signal. In addition, in some embodiments, the shunt filter 630 as described herein may be used in combination with the main-branch inductors 632, 634, 636 for more effectively removing the harmonic signals.

FIG. 16 illustrates a schematic diagram of at least a part of a grid side or rectifier side of the power conversion system shown in FIG. 1 in accordance with another exemplary embodiment of the present disclosure. The arrangements of the grid side 620 shown in FIG. 16 are substantially similar to what has been shown and described with reference to FIG. 11. Thus, elements in FIG. 16 designated with the same reference numerals as FIG. 11 will not be described in detail. In particular, in the embodiment shown in FIG. 16, the grid side 620 further includes three-phase second inductors 682, 684, 684 for matching power or capacity between the power grid 622 and the first converter 624. Moreover, the grid side 620 further includes a second filter 691. In one embodiment, the second filter 690 includes a common-mode (CM) filter which includes a first CM inductor 693 and a second CM inductor 695. The first and second CM inductors 693 and 695 are magnetically coupled together with two dots arranged on the same side. In the illustrated embodiment, the two dots are arranged at a side adjacent to the DC-link 626. In other embodiments, the two dots may be arranged at another side adjacent to the first converter 624.

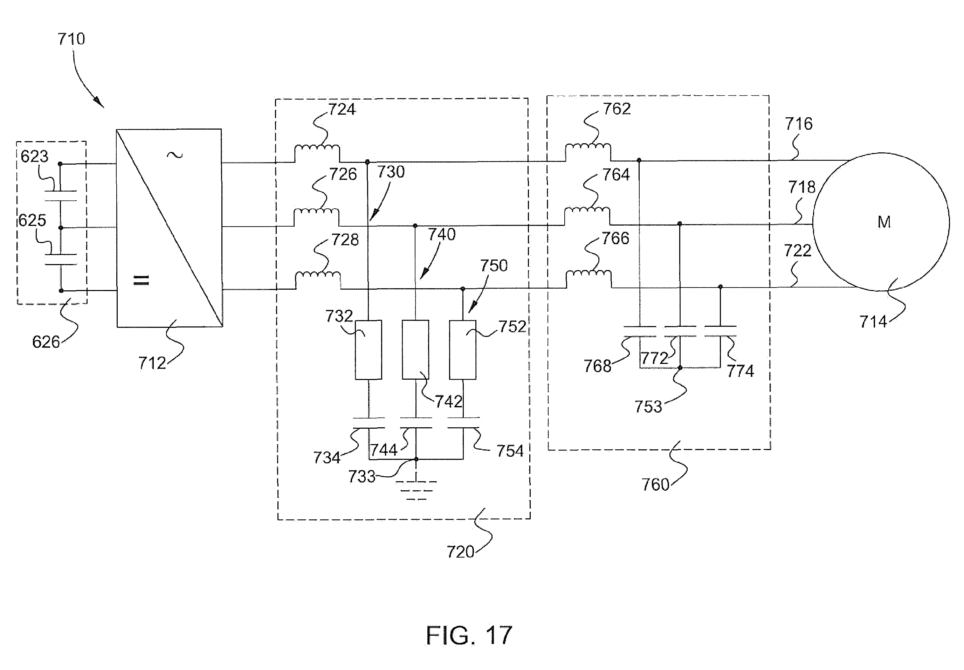

FIG. 17 illustrates a schematic diagram of at least a part of a load side or machine side of the power conversion system shown in FIG. 1 in accordance with an exemplary embodiment of the present disclosure. In the illustrated embodiment, the load side or machine side 710 includes a second converter or more particularly an inverter 712 which is electrically coupled between the DC-link 626 and a load 714. In one embodiment, the DC-link 626 includes a first capacitor 623 and a second capacitor 625 coupled in series. In one embodiment, the load 714 may include an AC electric motor, for example, a three-phase AC electric motor. In one embodiment, the second converter or inverter 712 is arranged to have a nested neutral point piloted topology as shown in FIG. 2. The second converter or inverter 712 is configured to convert DC voltage provided from the DC-link 626 to AC voltage (e.g., three-phase AC voltage). In one embodiment, the second converter 712 is electrically connected to the three-phase AC electric motor 714 through a first-phase line 716, a second-phase line 718, and a third-phase line 722 to supply three-phase AC voltages for driving the three-phase AC electric motor 714.

With continuing reference to FIG. 17, in one embodiment, the load side or machine side 710 further includes a load-side filter 720 which is electrically coupled between the second converter 712 and the three-phase AC electric motor 714. The load-side filter 720 is configured to remove harmonic signals contained in the three-phase AC voltages generated from the second converter 712 to reduce negative impact on the three-phase AC electric motor 714. In one embodiment, the load-side filter 720 includes a first-phase inductor 724, a second-phase inductor 726, and a third-phase inductor 728. The first-phase inductor 724 is attached to or electrically coupled to the first-phase line 716 arranged between the second converter 712 and the three-phase AC electric motor 714. The second-phase inductor 726 is attached to or electrically coupled to the second-phase line 718 arranged between the second converter 712 and the three-phase AC electric motor 714. The third-phase inductor 728 is attached to or electrically coupled to the third-phase line 722 arranged between the second converter 712 and the three-phase AC electric motor 714.

In one embodiment, the load-side filter 720 further includes a first branch line 730, a second branch line 740, and a third branch line 750. The first branch line 730 has one terminal connected to the first-phase line 716, the second branch line 740 has one terminal connected to the second-phase line 718, and the third branch line 750 has one terminal connected to the third-phase line 722. In addition, the other terminals of the three branch lines 730, 740, 750 are commonly connected to form a joint connection point 733. In one embodiment, the first branch line 730 includes a first resistor 732 and a first capacitor 734 coupled in series, the second branch line 740 includes a second resistor 742 and a second capacitor 744 coupled in series, and the third branch line 750 includes a third resistor 752 and a third capacitor 754 coupled in series. In practical implementations, the three inductors 724, 726, 728 can be arranged to have appropriate inductance, the three resistors 732, 742, 752 can be arranged to have appropriate resistance, and the three capacitors 734, 744, 754 can be arranged to have appropriate capacitance, such that the harmonic signals can be effectively removed. As noted above, when the three-phase AC electric motor 714 can withstand the common-mode stress, the load-side filter 720 can be commonly grounded with respect to the grid-side filter 690 or 691. In such as case, the common-mode filter 690 or 691 (shown in FIGS. 13-16) can be eliminated. Therefore, common-mode voltage standards of the grid can be met, efficiency and power density of the system can be improved, and cost can be reduced.

With continuing reference to FIG. 17, in the illustrated embodiment, the load-side 710 further includes an equivalent impedance circuit 760 which represents the impedance of the three-phase lines arranged between the second converter 624 and the three-phase AC electric motor 714. In one embodiment, the equivalent impedance circuit 760 takes a form of first-order circuit. In other embodiments, the equivalent impedance circuit 760 can be multi-order circuit. In the illustrated embodiment, the equivalent impedance circuit 760 includes a first-phase inductor 762, a second-phase inductor 764, and a third-phase inductor 766, a first capacitor 768, a second capacitor 772, and a third capacitor 774.

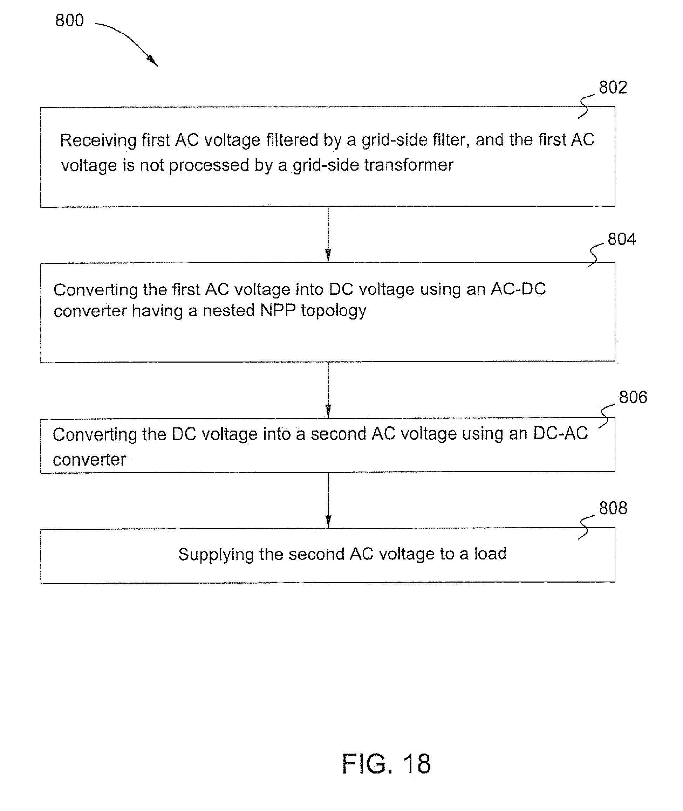

FIG. 18 illustrates a flowchart of a power conversion method 800 in accordance with an exemplary embodiment of the present disclosure. In some embodiments, a power conversion system configured to have a transformerless structure is used for perform power conversion operations. More specifically, in such as a transformerless power conversion system, a first converter or a grid-side converter arranged to have a nested neutral point piloted topology is coupled to a power gird through one or more grid-side filters, thereby conventionally used transformer can be eliminated.

In one embodiment, the method 800 may start to implement from block 802. At block 802, first AC voltage provided from the power grid and filtered through a grid-side filter is received, and the first AC voltage is not processed by a transformer. In one embodiment, the first AC voltage is a three-phase AC voltage. The grid-side filter may include a differential-mode filter or further include a common-mode filter.

The method 800 may further include a block 804. At block 804, a first converter or an AC-DC converter having the nested neutral point piloted topology is used to convert the first AC voltage into DC voltage. In one embodiment, the five-level converter 200 shown in FIG. 2 and FIG. 3 can be used to perform such an AC-DC power conversion. In some embodiments, the DC voltage provided from the AC-DC converter may be supplied to a DC-link to perform filtering operations. In some other embodiments, a common-mode filter may be used to filter common mode signals from the DC voltage.

The method 800 may further include a block 806. At block 806, a second converter or a DC-AC converter is used to convert the DC voltage into second AC voltage. In one embodiment, the five-level converter 200 shown in FIG. 2 and FIG. 3 can be used to perform such DC-AC power conversion.

The method 800 may further include a block 808. At block 808, the second AC voltage is supplied to a load, for example, an AC electric machine. When the AC electric machine is a three-phase AC electric machine, the second AC voltage can be a three-phase AC voltage.

While the invention has been described with reference to exemplary embodiments, it will be understood by those skilled in the art that various changes may be made and equivalents may be substituted for elements thereof without departing from the scope of the invention. Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional assemblies and techniques in accordance with principles of this disclosure. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A grid-side transformerless power conversion system configured to perform power conversion between a power grid (622) and a load (714), the power conversion system comprising:
a first converter (624) configured to convert first AC power provided from the power grid (622) into DC power, the first converter (624) comprising:
a first converter module (222; 410); and
a second converter module (224; 420) coupled to the first converter module (222; 420) to form a nested neutral point piloted topology;
a first filter (630) coupled between the power grid (622) and the first converter (624); and
a second converter (712) coupled to the first converter (624), the second converter (712) configured to convert the DC power into second AC power and provide the second AC power to the load (714).

2. The power conversion system of claim 1, wherein the first filter comprises a differential-mode (DM) filter (630) including:
at least one first DM inductor (632) attached to at least one connection line (638) coupled between the power grid (622) and the first converter (624); and
a branch line (650) coupled to the at least one connection line (632), the branch line (650) comprising at least one capacitor (654); and
optionally at least one second DM inductor (682) attached to the at least one conduction line (632).

3. The power conversion system of claim 1, wherein the first filter comprises a differential-mode (DM) filter (630) including at least one branch line (651) including an inductor (663) and a capacitor (657) coupled in series.

4. The power conversion system of claim 1 or claim 2, wherein the first filter comprises a three-phase differential-mode (DM) filter (630) including:
a first-phase first inductor (632) attached to a first-phase line (638) coupled between the power grid (622) and the first converter (624);
a second-phase first inductor (634) attached to a second-phase line (642) coupled between the power grid (622) and the first converter (624);
a third-phase first inductor (636) attached to a third-phase line (644) coupled between the power grid (622) and the first converter (624);
a first branch line (650) attached to the first-phase line (638), the first branch line comprising a first capacitor (654);
a second branch line (660) attached to the second-phase line (642), the second branch line comprising a second capacitor (664); and
a third branch line (670) attached to the third-phase line (644), the third branch line comprising a third capacitor (674);
wherein the first branch line (638), second branch line (642), and the third branch line (644) are commonly connected to form a joint connection point (676).

5. The power conversion system of claim 4, wherein the joint connection point (676) is selectively grounded.

6. The power conversion system of claim 4 or claim 5, wherein the three-phase DM filter further includes:
a first-phase second inductor (682) coupled in series with the first-phase first inductor (632);
a second-phase second inductor (684) coupled in series with the second-phase first inductor (634); and
a third-phase second inductor (686) coupled in series with the third-phase first inductor (636).

7. The power conversion system of any preceding claim, further comprising a second filter (690; 691) coupled between the power grid (622) and the first converter (624) or between the first converter (624) and the second converter (712), the second filter (690; 691) being a common-mode (CM) filter.

8. The power conversion system of any preceding claim, further comprising load-side filter (720) coupled between the second converter (712) and the load (714), the load-side filter optionally comprising a three-phase filter (720) including:
a first-phase inductor (724) attached to a first-phase line (716) coupled between the second converter (712) and the load (714);
a second-phase inductor (726) attached to a second-phase line (718) coupled between the second converter (712) and the load (714); and
a third-phase inductor (728) attached to a third-phase line (722) coupled between the second converter (712) and the load (714).

9. The power conversion system of any preceding claim, wherein each of the first converter module (222; 410) and the second converter module (226; 420) comprises a plurality of switch units (228, 232, 234, 236, 238, 242, 244, 246; 412, 414, 416, 418, 422, 424, 426, 428), and wherein when the first converter (624) is operated to perform power conversion, at least two of the plurality of switch units are configured to be switched both in a complementary pattern and a non-complementary pattern.

10. The power conversion system of any preceding claim, wherein each of the first converter module (222; 410) and the second converter module (224; 420) comprises a plurality of switch units (228, 232, 234, 236, 238, 242, 244, 246; 412, 414, 416, 418, 422, 424, 426, 428), and wherein at least one of the switch units comprises a single switch device or comprise multiple switch devices (316, 318, 322) coupled in series.

11. The power conversion system of any preceding claim, wherein the first converter (222; 410) comprises a first flying capacitor (225; 442) and a second flying capacitor (226; 444) coupled in series with the first flying capacitor (225; 442); wherein voltages of the first flying capacitor (225; 442) and the second flying capacitor (226; 444) are substantially balanced in one or more switching control cycles by selectively using redundant switching states of switching signals supplied to the plurality of switch units (228, 232, 234, 236, 238, 242, 244, 246; 412, 414, 416, 418, 422, 424, 426, 428).

12. The power conversion system of any preceding claim, wherein each of the first converter module (222; 410) and the second converter module (224; 420) comprises a plurality of switch units (228, 232, 234, 236, 238, 242, 244, 246; 412, 414, 416, 418, 422, 424, 426, 428), and wherein at least one switching signal supplied to at least one of the plurality of switch units is blocked to reduce the switching numbers during at least part time period of a switching control cycle.

13. A method for performing power conversion between a power grid (622) and a load (714) using a power conversion system, the power conversion system comprising an AC-DC converter (624) and a DC-AC converter (712), the AC-DC converter (624) comprising at least a first converter module (222; 410) and a second converter module (224; 420) coupled together to form a nested neutral point piloted topology, the method comprising:
receiving first AC voltage filtered by a grid-side filter (630), wherein the first AC voltage is not processed by a grid-side transformer;
converting the first AC voltage to DC voltage using the AC-DC converter (624);
converting the DC voltage to second AC voltage using the DC-AC converter (712); and
providing the second AC voltage to the load (714).

14. The method of claim 13, further comprising using a differential-mode (DM) filter (630) to filter the first AC voltage.

15. The method of claim 14, further comprising selectively grounding the DM filter (630).
